# EUROPEAN PATENT SPECIFICATION

(11) **EP 4 604 601 B1**
(45) Date of publication and mention of the grant of the patent: **02.12.2026**
(21) Application number: 23899618.5
(22) Date of filing: 26.10.2023
(51) Int. Cl.: H04J 3/06, H04L 43/0852

(54) **LINK DETERMINISTIC DELAY DETERMINATION METHOD, ELECTRONIC DEVICE, AND COMPUTER STORAGE MEDIUM**
VERFAHREN ZUR BESTIMMUNG DER DETERMINISTISCHEN VERBINDUNGSVERZÖGERUNG, ELEKTRONISCHE VORRICHTUNG UND COMPUTERSPEICHERMEDIUM
PROCÉDÉ DE DÉTERMINATION DE RETARD DÉTERMINISTE DE LIAISON, DISPOSITIF ÉLECTRONIQUE ET SUPPORT DE STOCKAGE INFORMATIQUE

(30) Priority: 09.12.2022 CN 202211582740
(43) Date of publication of application: 20.08.2025
(73) Proprietor: Sanechips Technology Co., Ltd., Shenzhen, Guangdong 518055 (CN)
(72) Inventor: HUANG, Zhen, Shenzhen, Guangdong 518055 (CN)
(74) Representative: Savi, Massimiliano
(86) International application number: PCT/CN2023/126768
(87) International publication number: WO 2024/120037

(56) References cited:
- CN-A- 102 812 680
- CN-A- 108 696 716
- CN-A- 114 165 298
- US-A1- 2014 177 489
- US-A1- 2017 235 689
- US-A1- 2019 306 062

## Description

### TECHNICAL FIELD

The embodiments of the present application relate to, but are not limited to, the technical field of communication, and particularly to a method for determining link deterministic delay, an electronic equipment and a computer storage medium.

### BACKGROUND

With the rapid development of wireless communication technology, especially with the large-scale commercial use of 5G (5th Generation Mobile Communication Technology) and the rapid pre-research of 6G (6th Generation Mobile Communication Technology), increasingly precise indicators for the synchronization and the delay of data transmission links of wireless communication devices (or components) are needed. For example, 5G wireless communication devices have strict quantitative requirements for the absolute delay of a single channel and the relative delay between multiple channels in terms of antenna channel data transmission. In fact, different operation scenarios of wireless communication devices (or components), or different time periods of operation after startup, will cause changes in data transmission delays. In order to meet the established delay requirements, wireless communication devices (or components) need to adopt a large number of additional technologies in the design, which greatly increases the complexity of design implementation and prolongs the design and iteration cycle of the product.

At present, in terms of obtaining deterministic delay of data links, JESD204C interface technology has great advantages, but it also has many disadvantages such as limited delay value, delay waste, and insufficient delay. Therefore, a more mature method for obtaining link deterministic delay is urgently needed.

US20170235689A1 provides a method for determining link delay. The method includes: according to a preset frequency division multiple, performing frequency division on a first Local Multi Frame Clock (LMFC) of each data lane obtained by parsing to obtain a second LMFC corresponding to each data lane, and, according to the second LMFC, writing respectively the data of each data lane into a corresponding buffer; and according to a SYSREF signal and a preset LMFC interval, generating a third LMFC, and, according to the third LMFC, reading respectively the data of each data lane from the corresponding buffer. The period of the second LMFC is the same as the period of the third LMFC.

### SUMMARY

In view of the above-mentioned deficiencies in the prior art, the present application provides a method for determining link deterministic delay, an electronic equipment, and a computer storage medium.

In the first aspect, an embodiment of the present application provides a method for determining link deterministic delay, which is applied to a receiving end. The method includes: performing frequency division processing and frequency multiplication processing on an initial frame boundary according to a preset frequency division multiple and a preset frequency multiplication multiple, so as to obtain a frequency multiplication frame boundary; the frequency multiplication frame boundary is configured for writing data received from a link into a cache of the link, or reading data received in the link from the cache; and determining the link deterministic delay according to estimated absolute link delay and the frequency multiplication frame boundary.

In a second aspect, an embodiment of the present application provides a receiving end. The receiving end includes a first processing module and a second processing module. The first processing module is configured for performing frequency division processing and frequency multiplication processing on an initial frame boundary according to a preset frequency division multiple and a preset frequency multiplication multiple, so as to obtain a frequency multiplication frame boundary; the frequency multiplication frame boundary is configured for writing data received from a link into a cache of the link, or reading data received in the link from the cache. The second processing module is configured for determining the link deterministic delay according to estimated absolute link delay and the frequency multiplication frame boundary.

In a third aspect, an embodiment of the present application provides electronic equipment including at least one processor and a storage device. At least one program is stored on the storage device. The at least one processor implements the method for determining link deterministic delay as described above when executing the at least one program by the at least one processor.

In a fourth aspect, an embodiment of the present application provides a computer storage medium, and a computer program stored on the computer storage medium. The method for determining link deterministic delay as described above is implemented when executing the program.

### BRIEF DESCRIPTION OF THE DRAWINGS

FIG. 1 is a first flowchart of a method for determining link deterministic delay according to an embodiment of the present application.
FIG. 2 is a second flowchart of a method for determining link deterministic delay according to an embodiment of the present application.
FIG. 3 is a third flowchart of a method for determining link deterministic delay according to an embodiment of the present application.
FIG. 4 is a fourth flowchart of a method for determining link deterministic delay according to an embodiment of the present application.
FIG. 5 is a fifth flowchart of a method for determining link deterministic delay according to an embodiment of the present application.
FIG. 6 is a sixth flowchart of a method for determining link deterministic delay according to an embodiment of the present application.
FIG. 7 is a seventh flowchart of a method for determining link deterministic delay according to an embodiment of the present application.
FIG. 8 is a schematic diagram of a principle of an embodiment of the present application.
FIG. 9 is a schematic diagram showing that a cycle of RX_mul_lemc is smaller than a cycle of RX_lemc according to an embodiment of the present application.
FIG. 10 is a schematic diagram showing that a cycle of RX_mul_lemc is larger than a cycle of RX_lemc according to an embodiment of the present application.

### DETAILED DESCRIPTION OF THE EMBODIMENTS

Example embodiments will be described more fully below with reference to the accompanying drawings, but the example embodiments may be embodied in different forms and should not be construed as limited to the embodiments set forth herein. On the contrary, the purpose of providing these embodiments is to make the present application thorough and complete and to enable those skilled in the art to fully understand the scope of the present application.

As used herein, the term "and/or" includes any and all combinations of one or more of the relevant listed items.

The terms used herein are only configured for describing specific embodiments and are not intended to limit the present application. As used herein, the singular forms "one" and "the" are also intended to include the plural forms unless the context clearly indicates otherwise. It will also be understood that when the terms "include" and/or "make of..." are used in this specification, the presence of the features, wholes, steps, operations, elements, components and/or components is specified, but the presence or addition of one or more other features, wholes, steps, operations, elements, components and/or groups thereof is not excluded.

The embodiments described herein may be described with reference to plan views and/or cross-sectional views with the aid of ideal schematic diagrams of the present application. Therefore, the example illustrations may be modified according to manufacturing techniques and/or tolerances. Therefore, the embodiments are not limited to the embodiments shown in the drawings, but include modifications of the configurations formed based on the manufacturing process. Therefore, the regions illustrated in the drawings have schematic properties, and the shapes of the regions shown in the drawings illustrate the specific shapes of the regions of the components, but are not intended to be limiting.

Unless otherwise defined, all terms (including technical and scientific terms) used herein have the same meanings as those commonly understood by those skilled in the art. It will also be understood that terms such as those defined in common dictionaries should be interpreted as having meanings consistent with their meanings in the context of the relevant technology and the present application, and will not be interpreted as having idealized or overly formal meanings unless explicitly defined herein.

There may be multiple data processing units in the JESD204 system, which are distributed in different clock domains and have no clear delay relationship, resulting in different delays in the link after each power-on or re-establishment of the connection. The JESD204B interface technology provides such a mechanism for deterministic delay of the interface. The deterministic delay on the link refers to the delay from the frame-based data input of the TX device (i.e., the transmitting end) to the reception and output of the frame data by the RX device (i.e., the receiving end), and it is consistent after each power-on or re-establishment of the connection.

At present, the JESD204C interface technology has great advantages in obtaining the deterministic delay of the data link. The JESD204C interface technology is an indispensable technology for realizing high-speed serial transmission of communication data. The JESD204C interface standard is described in detail according to the key technologies of the physical layer, link layer, and transport layer. The JESD204C protocol is continuously evolving towards the JESD204C.1 and JESD204_USR (USR: ultra-short reach) interface standards under the promotion of the JESD organization, and there is a great development trend and expansion space in the future.

According to the method described in the JESD204C protocol, the data transmitting side and the data receiving side base on the same benchmark reference signal. The data transmitting side generates a cycle frame boundary (TX_lemc: local extend multiblock clock) based on the benchmark reference signal (in the JESD204C protocol, it is the SYSREF signal), frames the data (data_in) in a certain format with TX_lemc and transmits it by the subsequent serial link; the data receiving side receives the data by the serial link and recovers the data channel associated frame boundary (RC_lemc: recovery lemc). The data receiving side generates the cycle frame boundary (RX_lemc: local extend multiblock clock) based on the SYSREF signal; and the receiving side writes the data into the memory under the control of RC_lemc, and reads the data (data_out) from the memory under the control of RX_lemc. According to the above-mentioned method, in the case that TX_lemc, RC_lemc and RX_lemc are strictly equal, and in the case that the absolute delay of data from the transmitting end to the receiving end is required to be less than the above-mentioned lemc cycle, the transmission from data_in to data_out obtains a link deterministic delay: a lemc cycle.

However, the JESD204C interface technology also has many drawbacks such as limited delay value, delay waste, and insufficient delay. On one hand, due to the limitation of the frame length by the protocol itself, that is, the limitation of the lemc cycle (local extension of multiple clocks), the deterministic delay obtained by the data link can only be the number of clocks corresponding to the value that the lemc cycle can take. On the other hand, since the absolute delay of data from the transmitting end to the receiving end is required to be less than the lemc cycle, sometimes in order to reduce the absolute delay of data from the transmitting end to the receiving end, although the circuit design in the device and the board-level PCB routing have reached the extreme short design, they still cannot meet this requirement. In order to use the JESD204C interface technology, it is necessary to expand the lemc cycle. However, not all parameters can support the expansion of the lemc cycle. On the other hand, when the lemc cycle corresponding to a certain parameter is very large, but in fact the absolute delay of data from the transmitting end to the receiving end is very low, it will cause delay waste.

In view of this, the embodiment of the present application proposes that in order to solve the many drawbacks of the JESD204C interface technology, such as limited delay value, delay waste, and insufficient delay, a method for obtaining a flexible link deterministic delay is needed, to realize that when the LEMC cycle is fixed, the deterministic delay is no longer limited to one LEMC cycle, but can be greater than one LEMC cycle or less than one LEMC cycle. Furthermore, the flexible link deterministic delay can be obtained by flexibly changing the frame boundary of the receiving end configured for writing the data received from the link to the cache of the link and the frame boundary of the receiving end configured for reading the data received in the link from the cache of the link.

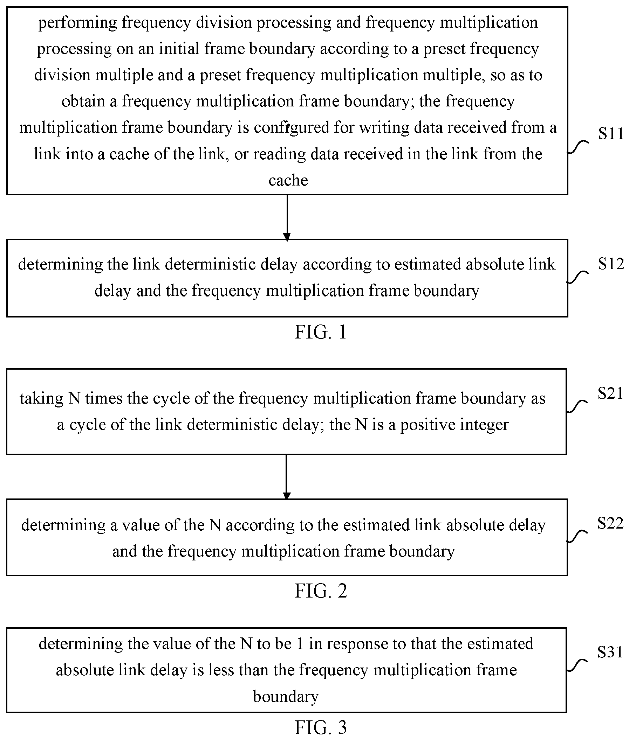

Accordingly, as shown in FIG. 1, the embodiment of the present application provides a method for determining link deterministic delay, which is applied to the receiving end, and the method may include the following steps.

In step S11, performing frequency division processing and frequency multiplication processing on an initial frame boundary according to a preset frequency division multiple and a preset frequency multiplication multiple, so as to obtain a frequency multiplication frame boundary; the frequency multiplication frame boundary is configured for writing data received from a link into a cache of the link, or reading data received in the link from the cache.

In step S12, determining the link deterministic delay according to estimated absolute link delay and the frequency multiplication frame boundary.

The link deterministic delay can correspond to multiple links (sometimes referred to as lanes below). The initial frame boundary can be a frame boundary originally configured for writing data received from the link into the cache of the link (for example, the channel associated frame boundary RC_lemc, which is recovered by the receiving side from the data received in the link, is configured for writing data into the cache of the link), or can be a frame boundary originally configured for reading data received in the link from the cache of the link (for example, the cycle frame boundary RX_lemc, which is generated by the receiving side according to the SYSREF signal, is configured for reading data received in the link from the cache of the link). When the initial frame boundary is the frame boundary configured for write operation, the obtained frequency multiplication frame boundary is also the channel associated frame boundary configured for write operation. When the initial frame boundary is the frame boundary configured for read operation, the obtained frequency multiplication frame boundary is also the alignment frame boundary configured for read operation. After obtaining the frequency multiplication frame boundary, taking the frequency multiplication frame boundary as the new frame boundary configured for data read and write operation.

It should be noted that the initial frame boundary and the frequency multiplication frame boundary can be two different types of frame boundaries, but the frame boundary configured for writing data received from a lane to the cache of the lane and the frame boundary configured for reading data received in the lane from the cache of the lane have consistent cycles. Therefore, in the method for obtaining the link deterministic delay, processing any type of initial frame boundary can determine the link deterministic delay.

The absolute link delay refers to the time it takes for data to be sent from the transmitting end to the receiving end and then recovered, is the sum of the processing delay of the transmitting side, the routing delay between the transmitting end and the receiving end, and the processing delay of the receiving end, and can be estimated; the embodiments of the present application will not be described in detail here.

It can be seen that, when the cycle of the initial frame boundary is fixed, performing frequency division processing first and then performing frequency multiplication processing on an initial frame boundary according to a preset frequency division multiple and a preset frequency multiplication multiple; by adjusting the ratio of the preset frequency division multiple to the preset frequency multiplication multiple, a flexible frequency multiplication frame boundary of any size can be obtained, and taking the frequency multiplication frame boundary as a new frame boundary configured for performing write/read operations on data, which is no longer limited to a fixed frame structure cycle. The frequency multiplication frame boundary can be larger than the initial frame boundary or smaller than the initial frame boundary, and the frequency multiplication frame boundary and the initial frame boundary are not limited to a certain integer multiple relationship. Furthermore, after obtaining a frequency multiplication frame boundary of any size, determining the link deterministic delay according to the estimated absolute link delay and the frequency multiplication frame boundary, and the link deterministic delay with flexible value can be obtained. The problem of limited value of deterministic delay is solved; when the absolute link delay is relatively small but the deterministic delay is relatively large, the deterministic delay can be reduced without changing the circuit design, solving the problem of delay waste caused by the relatively small absolute link delay but relatively large deterministic delay; when the absolute link delay is relatively large but the deterministic delay is relatively small, there is no need to shorten the line by changing the circuit design to reduce the absolute link delay to cause the absolute link delay to be smaller than the deterministic delay. Instead, the deterministic delay can be increased without changing the circuit design, solving the problem of high circuit design complexity caused by the relatively large absolute link delay but relatively small deterministic delay, and reducing the complexity of circuit design.

In addition, for some components or devices, it is necessary to operate in different application scenarios; even if the frame structure cycle is identical, because the processing clock cycle used in different application scenarios may be inconsistent, it will cause the delay of the components or devices in these application scenarios to be inconsistent. By adopting the method for determining link deterministic delay provided by the embodiment of the present application, the frequency multiplication frame boundary configured for data read and write operations used in each application scenario can be different, while the deterministic delay obtained in each application scenario can be consistent, thus further reducing the design complexity of the components or devices, and improving the compatibility of components or devices.

It should be noted that any data transmission system with a specific frame structure can use the method for determining link deterministic delay provided by the embodiment of the present application to obtain the deterministic delay, and is not limited to the data transmission system with the LEMC frame structure specified in the JESD204C protocol mentioned above. For example, it may also be a data transmission system having a Local Multi Frame Clock (LMFC) frame structure, and the LMFC frame structure is specified in the JESD204B protocol.

The following only takes the LEMC frame structure as an example. As a specific implementation, the initial frame boundary can be a channel associated frame boundary RC_lemc configured for data write operations, or an alignment frame boundary RX_lemc configured for data read operations. When the initial frame boundary is RC_lemc, the frequency multiplication frame boundary can be expressed as RC_mul_lemc, and when the initial frame boundary is RX_lemc, the frequency multiplication frame boundary can be expressed as RX_mul_lemc. The cycle of RC_lemc is consistent with the cycle of RX_lemc, and the cycle of RC_mul_lemc is consistent with the cycle of RX_mul_lemc.

Accordingly, in some embodiments, the initial frame boundary is an initial channel associated frame boundary or an initial alignment frame boundary, the frequency multiplication frame boundary is a frequency multiplication channel associated frame boundary or a frequency multiplication alignment frame boundary; the initial channel associated frame boundary corresponds to the frequency multiplication channel associated frame boundary, the initial alignment frame boundary corresponds to the frequency multiplication alignment frame boundary, and a cycle of the frequency multiplication channel associated frame boundary and a cycle of the frequency multiplication alignment frame boundary are identical. The frequency multiplication channel associated frame boundary is configured for writing data received from the link into the cache of the link. The frequency multiplication alignment frame boundary is configured for reading the data received in the link from the cache.

The absolute link delay can be estimated and needs to be less than the link deterministic delay. It can be that obtaining a flexible deterministic delay based on the frequency multiplication frame boundary by taking the absolute link delay as an auxiliary reference. Accordingly, in some embodiments, as shown in FIG. 12, the determining the link deterministic delay according to estimated absolute link delay and the frequency multiplication frame boundary (i.e., step S12) may include the following steps.

In step S21, taking N times the cycle of the frequency multiplication frame boundary as a cycle of the link deterministic delay; the N is a positive integer.

In step S22, determining a value of the N according to the estimated link absolute delay and the frequency multiplication frame boundary.

Taking the frequency multiplication frame boundary as RX_mul_lemc as an example, the link deterministic delay can be expressed as N*RX_mul_lemc, where N is a positive integer, and the value of N is further determined according to the estimated absolute link delay and the frequency multiplication frame boundary.

In some embodiments, as shown in FIG. 3, the determining a value of the N according to the estimated link absolute delay and the frequency multiplication frame boundary (i.e., step S122) may include the following step.

In step S31, determining the value of the N to be 1 in response to that the estimated absolute link delay is less than the frequency multiplication frame boundary.

The estimated absolute link delay is represented as T_d. Taking the frequency multiplication frame boundary as RX_mul_lemc as an example, in the case where T_d is less than RX_mul_lemc, the deterministic delay can be RX_mul_lemc, that is, the value of N is 1.

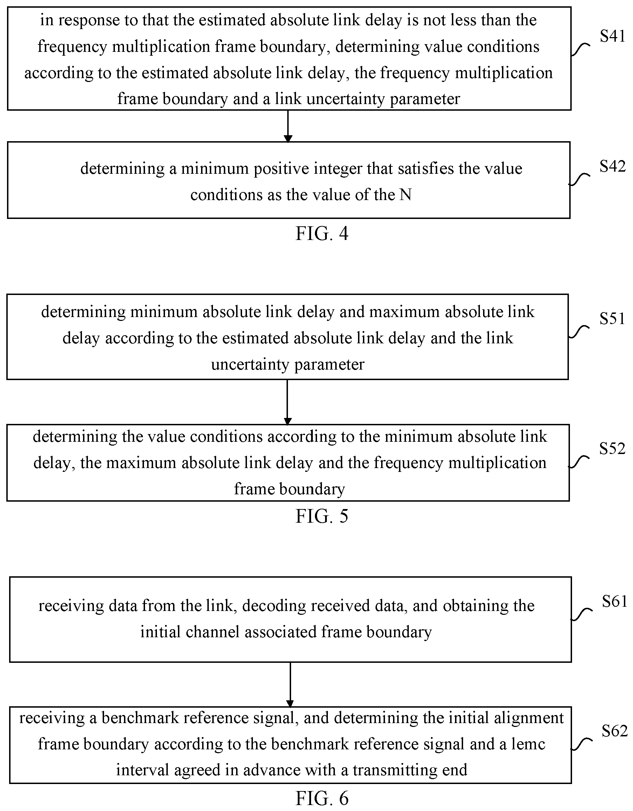

In some embodiments, as shown in FIG. 4, the determining a value of the N according to the estimated link absolute delay and the frequency multiplication frame boundary (i.e., step S122) may include the following steps,
In step S41, in response to that the estimated absolute link delay is not less than the frequency multiplication frame boundary, determining value conditions according to the estimated absolute link delay, the frequency multiplication frame boundary and a link uncertainty parameter.
In step S42, determining a minimum positive integer that satisfies the value conditions as the value of the N.

The estimated absolute link delay is represented as T_d. Taking the frequency multiplication frame boundary as RX_mul_lemc as an example, in the case where T_d is not less than RX_mul_lemc, RX_mul_lemc cannot be directly used as the link deterministic delay. At this time, it is necessary to further determine the value of N that can make the absolute link delay less than the link deterministic delay and all the lanes can obtain the identical deterministic delay according to the estimated absolute link delay, the frequency multiplication frame boundary and the link uncertainty parameter.

In the present application, the "link uncertainty parameter" refers to a parameter that changes due to environmental factors. For example, a parameter that changes due to environmental factors such as voltage and temperature. The "link uncertainty parameter" can be determined based on actual environmental factors, specific tests, etc. Certainly, the link uncertainty parameter can also be expressed according to relevant measurement standards (for example, "Evaluation and Expression of Measurement Uncertainty" ).

Accordingly, in some embodiments, as shown in FIG. 5, the determining the value conditions according to the estimated absolute link delay, the frequency multiplication frame boundary and a link uncertainty parameter (that is, as described in step S41) may include the following steps.

In step S51, determining minimum absolute link delay and maximum absolute link delay according to the estimated absolute link delay and the link uncertainty parameter.

In step S52, determining the value conditions according to the minimum absolute link delay, the maximum absolute link delay and the frequency multiplication frame boundary.

The estimated absolute link delay is expressed as T_d. According to T_d and link uncertainty parameter, determining the minimum lane absolute delay T_d_min and the maximum lane absolute delay T_d_max among all lanes. Taking the frequency multiplication frame boundary as RX_mul_lemc as an example, the deterministic delay can be determined according to T_d_min, T_d_max and RX_mul_lemc.

Accordingly, in some embodiments, the value conditions may be: (N-1) times the cycle of the frequency multiplication frame boundary is less than the minimum link absolute delay, and N times the cycle of the frequency multiplication frame boundary is greater than the maximum link absolute delay.

The value conditions may be expressed as: T_d_min>(N-1)*RX_mul_lemc, and N*RX_mul_lemc>T_d_max.

As mentioned above, since the embodiment of the present application determines the link deterministic delay according to the estimated absolute link delay and the frequency multiplication frame boundary, after obtaining a frequency multiplication frame boundary of any size (i.e., the cycle of the frequency multiplication frame boundary is of any length), a link deterministic delay of any size is also obtained. The reason why a frequency multiplication frame boundary of any size can be obtained is that the preset frequency division multiple and the preset frequency multiplication multiple are not limited.

The preset frequency division multiple is expressed as d, and the preset frequency multiplication multiple is expressed as m, taking the initial frame boundary as RX _lemc, the frequency division frame boundary as RX_div_lemc, and the frequency multiplication frame boundary as RX_mul_lemc as an example, the cycle of RX_lemc is expressed as t0, the cycle of RX_mul_lemc is expressed as t1, and the least common multiple of t0 and t1 are expressed as c=LCM (t0, t1). Taking the cycle of RX_div_lemc as c, thus the frequency division multiple when processing frequency division on RX_lemc is d = c/t0, the frequency multiplication multiple when processing frequency multiplication on RX_div_lemc is m = c/t1, and performing frequency multiplication to obtain RX_mul_lemc, and the cycle of RX_mul_lemc is d/m times the cycle of RX_lemc. It can be seen that the cycle of RX_mul_lemc can be smaller or larger than the cycle of RX_lemc, and the relationship between RX_mul_lemc and RX_lemc is arbitrary and no longer limited to a certain integer multiple relationship. Even if the cycle of RX_lemc is a fixed lemc cycle, the cycle of RX_mul_lemc can be made to take any value by changing the values of d and m.

When the initial frame boundary is RC_lemc or RX_lemc, before the above-mentioned step S11, the receiving end recovers RC_lemc based on the data received in the lane, and generates RX_lemc based on the received benchmark reference signal (i.e., the SYSREF signal). Accordingly, in some embodiments, as shown in FIG. 6, the method further includes the steps of obtaining the initial channel associated frame boundary and the initial alignment frame boundary:
In step S61, receiving data from the link, decoding received data, and obtaining the initial channel associated frame boundary.
In step S62, receiving a benchmark reference signal, and determining the initial alignment frame boundary according to the benchmark reference signal and a lemc interval agreed in advance with a transmitting end.

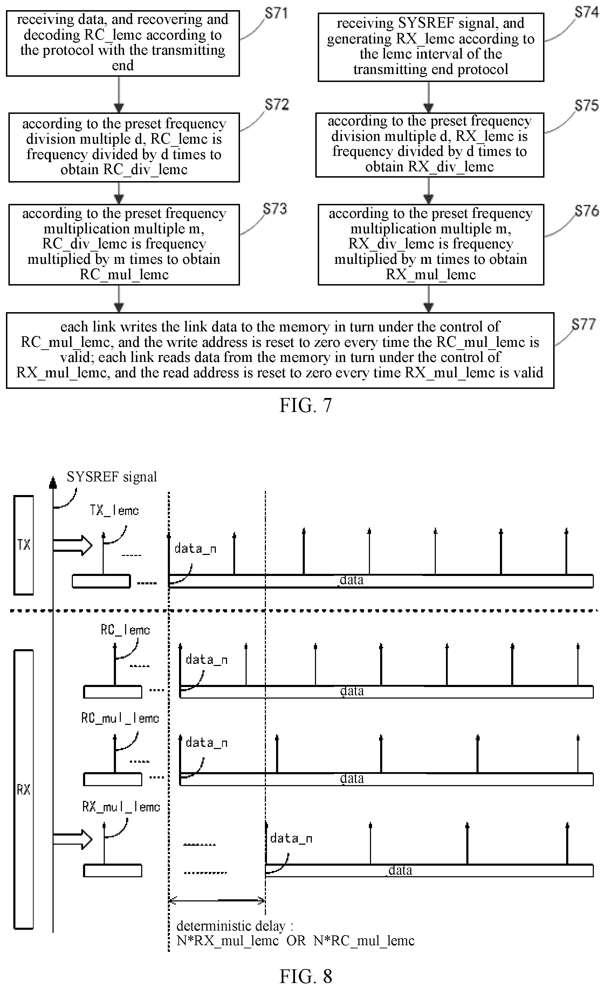

As shown in FIG. 7, the contents of steps S61, S62, and S11 are described in detail using a specific embodiment below.

In step S71, receiving data, and recovering and decoding RC_lemc according to the protocol with the transmitting end.

The content of step S71 is actually consistent with the content of step S61.

When data is transmitted by the serial link, the transmitting end and the receiving end will pre-agree on the frame format. For example, the JESD204C protocol stipulates a frame structure in units of multiple bytes, the transmitting end marks the frame boundary and transmits it by the link. The frame boundary is recorded as TX_lemc. The generation method of TX_lemc is similar to RX_lemc, and it is also generated by the transmitting end based on the received SYSREF signal. The receiving end obtains the initial frame boundary RC_lemc by performing a series of decoding on the received data stream according to the protocol pre-agreement with the transmitting end. The RC_lemc cycle and the TX_lemc cycle are identical.

In step S72, according to the preset frequency division multiple d, RC_lemc is frequency divided by d times to obtain RC_div_lemc.

The cycle of RC_div_lemc is d times the cycle of RC_lemc.

In step S73, according to the preset frequency multiplication multiple m, RC_div_lemc is frequency multiplied by m times to obtain RC_mul_lemc.

The cycle of RC_div_lemc is m times the cycle of RC_mul_lemc, and the cycle of RC_mul_lemc is d/m times the cycle of RC_lemc.

In step S74, receiving SYSREF signal, and generating RX_lemc according to the lemc interval of the transmitting end protocol.

The content of step S74 is actually consistent with the content of step S62, and there is no fixed execution order between steps S71 to S73 and steps S74 to S76.

The receiving end and the transmitting end pre-agree on the lemc interval according to the actual application scenario. For example, the JESD204C protocol predetermines the lemc interval according to a specific parameter configuration of the application scenario. The receiving end receives the SYSREF signal and takes it as a reference starting point, and generates a cycle signal RX_lemc with the lemc interval as the cycle interval.

In step S75, according to the preset frequency division multiple d, RX_lemc is frequency divided by d times to obtain RX_div_lemc.

The cycle of RX_div_lemc is d times the cycle of RX_lemc.

In step S76, according to the preset frequency multiplication multiple m, RX_div_lemc is frequency multiplied by m times to obtain RX_mul_lemc.

The cycle of RX_div_lemc is m times the cycle of RX_mul_lemc, and the cycle of RX_mul_lemc is d/m times the cycle of RX_lemc.

In step S77, each link writes the link data to the memory in turn under the control of RC_mul_lemc, and the write address is reset to zero when the first RC_mul_lemc received is valid; each link reads data from the memory in turn under the control of RX_mul_lemc, and the read address is reset to zero every time RX_mul_lemc is valid.

Particularly, for each link, a dedicated memory is provided, which is configured for caching the data received from the link. When receiving the first RC_mul _lemc, the write enable is set to be valid, the write address is reset to zero, and then the write address is incremented in sequence to write the link data into the memory. The data must be read after the data is written. When receiving the first RX_mul_lemc, the read enable is set to be valid, the read address is reset to zero, and then the read address is incremented in sequence to read the data from the memory.

The following is a brief description of the method for determining link deterministic delay provided by the embodiment of the present application, taking FIG. 8, FIG. 9 and FIG. 10 as examples.

As shown in FIG. 8, the transmitting end and the receiving end share the same benchmark reference signal, and the TX_lemc of the transmitting end and the RX_lemc of the receiving end are both generated based on the benchmark reference signal. In JESD204C, the benchmark reference signal is the SYSREF signal. Take a specific data_n data for illustration. The data_n data particularly refers to the data corresponding to the boundary of RC_mul_lemc obtained after RC_lemc is processed. Data_n is transmitted at the boundary of a certain TX_lemc. For a certain lane, data_n will appear at the time of solving RC_mul_lemc. Data_n will be written into the memory and wait to be read. The time when data_n is read is RX_mul_lemc. Since the delay of data transmission in different lanes is different, the arrival time of data_n in different lanes may also be different. For a certain lane, if data_n arrives earlier, it will stay in the memory for a longer time. For another lane, if data_n arrives later, it will stay in the memory for a shorter time. However, data_n of all lanes will be read at the same time, so that data_n of all lanes has the same deterministic delay from transmitting by TX_lemc to receiving synchronously by RX_mul_lemc, which is: N*RX_mul_lemc (N is a positive integer), and the unit is the working clock cycle.

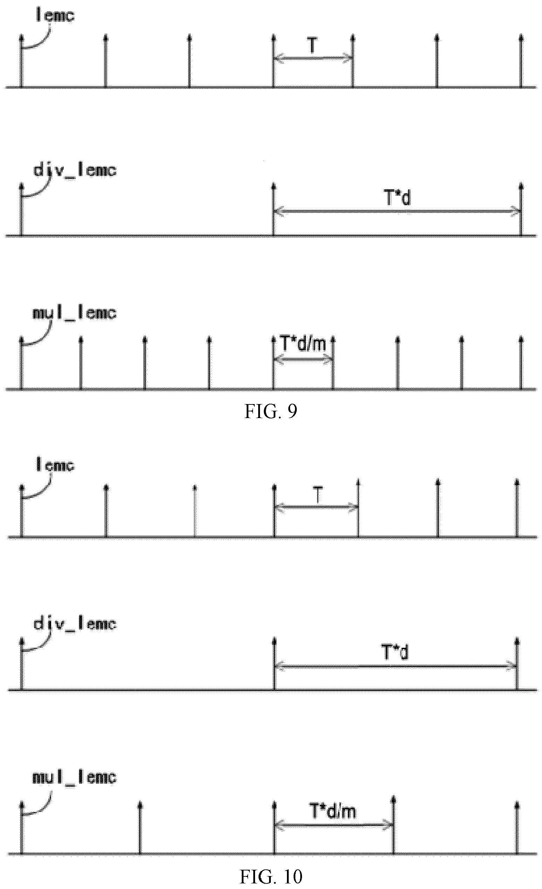

As shown in FIG. 9, which is a schematic diagram that the cycle of RX_mul_lemc is smaller than the cycle of RX_lemc. Firstly, RX_lemc is processed by frequency division by 3 times to obtain RX_div_lemc; then the obtained RX_div_lemc is processed by frequency multiplication by 4 times to obtain RX_mul_lemc; finally, the cycle of RX_mul_lemc is 3/4 of the cycle of RX_lemc, where T represents the cycle of RX_lemc.

As shown in FIG. 10, which is a schematic diagram that the cycle of RX_mul_lemc is larger than the cycle of RX_lemc. First, RX_lemc is processed by frequency division by 3 times to obtain RX_div_lemc; then the obtained RX_div_lemc is processed by frequency multiplication by 2 times to obtain RX_mul_lemc; finally, the cycle of RX_mul_lemc is 3/2 of the cycle of RX_lemc, where T represents the cycle of RX_lemc.

The embodiment of the present application further provides a receiving end. The receiving end may include a first processing module and a second processing module.

The first processing module is configured for performing frequency division processing and frequency multiplication processing on an initial frame boundary according to a preset frequency division multiple and a preset frequency multiplication multiple, so as to obtain a frequency multiplication frame boundary; the frequency multiplication frame boundary is configured for writing data received from a link into a cache of the link, or reading data received in the link from the cache.

The second processing module is configured for determining the link deterministic delay according to estimated absolute link delay and the frequency multiplication frame boundary.

In addition, the embodiment of the present application further provides an electronic equipment, which may include:
at least one processor;
a storage device including at least one program stored thereon;
the at least one processor implements the method for determining link deterministic delay as described above when executing the at least one program by the at least one processor.

In addition, the embodiment of the present application further provides a computer storage medium, a computer program stored on the computer storage medium, the method for determining link deterministic delay as described above is implemented when executing the program.

It will be appreciated by those skilled in the art that all or some of the steps in the method disclosed above, and the functional modules/units in the device may be implemented as software, firmware, hardware, and appropriate combinations thereof. In hardware implementations, the division between the functional modules/units mentioned in the above description does not necessarily correspond to the division of physical components; for example, a physical component may have multiple functions, or a function or step may be performed by several physical components in cooperation. Some or all physical components may be implemented as software executed by a processor, such as a central processing unit, a digital signal processing unit, or a microprocessor, or implemented as hardware, or implemented as an integrated circuit, such as an application-specific integrated circuit. Such software may be distributed on a computer-readable medium, which may include a computer storage medium (or non-transitory medium) and a communication medium (or transient medium). As is known to those skilled in the art, the term computer storage medium includes volatile and non-volatile, removable and non-removable media implemented in any method or technology configured for storing information (such as computer-readable instructions, data structures, program modules, or other data). Computer storage media include, but are not limited to, random-access memory (RAM), Read-Only Memory (ROM), Electrically Erasable Programmable Read-Only Memory (EEPROM), flash memory or other memory technology, Compact disc read-only memory (CD-ROM), digital versatile disk (DVD) or other optical disk storage, magnetic cassettes, tapes, magnetic disk storage or other magnetic storage devices, or any other medium that can be configured for storing the desired information and can be accessed by a computer. In addition, it is well known to those skilled in the art that communication media generally contain computer-readable instructions, data structures, program modules, or other data in modulated data signals such as carrier waves or other transmission mechanisms, and may include any information delivery medium.

Example embodiments have been disclosed herein, and although specific terms are employed, they are only used for and should only be interpreted as a general illustrative meaning, and not for the purpose of limitation. In some instances, it is apparent to those skilled in the art that, unless otherwise expressly stated, features, characteristics and/or elements described in conjunction with a particular embodiment may be used alone or in combination with features, characteristics and/or components described in conjunction with other embodiments. Therefore, it will be understood by those skilled in the art that various changes in form and detail may be made without departing from the scope of the present application as set forth in the appended claims.

## Claims

1. A method for determining link deterministic delay, comprising:
performing (S11) frequency division processing and frequency multiplication processing on an initial frame boundary according to a preset frequency division multiple and a preset frequency multiplication multiple, so as to obtain a frequency multiplication frame boundary; wherein the frequency multiplication frame boundary is configured for writing data received from a link into a cache of the link, or reading data received in the link from the cache; and
determining (S12) the link deterministic delay according to estimated absolute link delay and the frequency multiplication frame boundary.

2. The method according to claim 1, wherein the initial frame boundary is an initial channel associated frame boundary or an initial alignment frame boundary, the frequency multiplication frame boundary is a frequency multiplication channel associated frame boundary or a frequency multiplication alignment frame boundary, wherein the initial channel associated frame boundary corresponds to the frequency multiplication channel associated frame boundary, the initial alignment frame boundary corresponds to the frequency multiplication alignment frame boundary, and a cycle of the frequency multiplication channel associated frame boundary and a cycle of the frequency multiplication alignment frame boundary are identical;
the frequency multiplication channel associated frame boundary is configured for writing data received from the link into the cache of the link; and
the frequency multiplication alignment frame boundary is configured for reading the data received in the link from the cache.

3. The method according to claim 2, wherein the determining (S12) the link deterministic delay according to the estimated absolute link delay and the frequency multiplication frame boundary comprises:
taking (S21) N times a cycle of the frequency multiplication frame boundary as a cycle of the link deterministic delay; wherein the N is a positive integer; and
determining (S22) a value of the N according to the estimated link absolute delay and the frequency multiplication frame boundary.

4. The method according to claim 3, wherein the determining (S22) the value of the N according to the estimated link absolute delay and the frequency multiplication frame boundary comprises:
determining (S31) the value of the N to be 1 in response to that the estimated absolute link delay is less than the frequency multiplication frame boundary.

5. The method according to claim 3, wherein the determining (S22) the value of the N according to the estimated link absolute delay and the frequency multiplication frame boundary comprises:
in response to that the estimated absolute link delay is not less than the frequency multiplication frame boundary, determining (S41) value conditions of the N according to the estimated absolute link delay, the frequency multiplication frame boundary and a link uncertainty parameter; and
determining (S42) a minimum positive integer that satisfies the value conditions as the value of the N.

6. The method according to claim 5, wherein the determining (S41) the value conditions according to the estimated absolute link delay, the frequency multiplication frame boundary and the link uncertainty parameter comprises:
determining (S51) minimum absolute link delay and maximum absolute link delay according to the estimated absolute link delay and the link uncertainty parameter; and
determining (S52) the value conditions according to the minimum absolute link delay, the maximum absolute link delay and the frequency multiplication frame boundary.

7. The method according to claim 6, wherein the value conditions of the N is: (N-1) times the cycle of the frequency multiplication frame boundary is less than the minimum link absolute delay, and N times the cycle of the frequency multiplication frame boundary is greater than the maximum link absolute delay.

8. The method according to any one of claims 2 to 7, further comprising:
receiving (S61) data from the link, decoding received data, and obtaining the initial channel associated frame boundary; and
receiving (S62) a benchmark reference signal, and determining the initial alignment frame boundary according to the benchmark reference signal and a lemc interval agreed in advance with a transmitting end.

9. An electronic equipment, comprising:
at least one processor; and
a storage device, wherein at least one program is stored on the storage device;
wherein the at least one processor is configured to perform the method for determining link deterministic delay according to any one of claims 1 to 8.

10. A computer storage medium, comprising instructions which, when executed by a computer, cause the computer to carry out the method for determining link deterministic delay according to any one of claims 1 to 8.

## Patentansprüche

1. Verfahren zum Bestimmen einer deterministischen Verbindungsverzögerung, umfassend:
Durchführen (S11) einer Frequenzteilungsverarbeitung und einer Frequenzvervielfachungsverarbeitung an einer anfänglichen Rahmengrenze gemäß einem voreingestellten Frequenzteilungsvielfachen und einem voreingestellten Frequenzvervielfachungsvielfachen, um eine Frequenzvervielfachungsrahmengrenze zu erhalten; wobei die Frequenzvervielfachungsrahmengrenze zum Schreiben von über eine Verbindung empfangenen Daten in einen Cache der Verbindung oder zum Lesen von in der Verbindung empfangenen Daten aus dem Cache konfiguriert ist; und
Bestimmen (S12) der deterministischen Verbindungsverzögerung gemäß einer geschätzten absoluten Verbindungsverzögerung und der Frequenzvervielfachungsrahmengrenze.

2. Verfahren nach Anspruch 1, wobei die anfängliche Rahmengrenze eine anfängliche kanalzugeordnete Rahmengrenze oder eine anfängliche Ausrichtungsrahmengrenze ist, die Frequenzvervielfachungsrahmengrenze eine kanalzugeordnete Frequenzvervielfachungsrahmengrenze oder eine Frequenzvervielfachungs-Ausrichtungsrahmengrenze ist, wobei die anfängliche kanalzugeordnete Rahmengrenze der kanalzugeordneten Frequenzvervielfachungsrahmengrenze entspricht, die anfängliche Ausrichtungsrahmengrenze der Frequenzvervielfachungs-Ausrichtungsrahmengrenze entspricht, und ein Zyklus der kanalzugeordneten Frequenzvervielfachungsrahmengrenze und ein Zyklus der Frequenzvervielfachungs-Ausrichtungsrahmengrenze identisch sind;
die kanalzugeordnete Frequenzvervielfachungsrahmengrenze zum Schreiben von aus der Verbindung empfangenen Daten in den Cache der Verbindung konfiguriert ist; und
die Frequenzvervielfachungs-Ausrichtungsrahmengrenze zum Lesen der in der Verbindung empfangenen Daten aus dem Cache konfiguriert ist.

3. Verfahren nach Anspruch 2, wobei das Bestimmen (S12) der deterministischen Verbindungsverzögerung gemäß der geschätzten absoluten Verbindungsverzögerung und der Frequenzvervielfachungsrahmengrenze umfasst:
Heranziehen (S21) des N-Fachen eines Zyklus der Frequenzvervielfachungsrahmengrenze als Zyklus der deterministischen Verbindungsverzögerung; wobei N eine positive ganze Zahl ist; und
Bestimmen (S22) eines Werts des N gemäß der geschätzten absoluten Verbindungsverzögerung und der Frequenzvervielfachungsrahmengrenze.

4. Verfahren nach Anspruch 3, wobei das Bestimmen (S22) des Werts des N gemäß der geschätzten absoluten Verbindungsverzögerung und der Frequenzvervielfachungsrahmengrenze umfasst:
Bestimmen (S31) des Werts des N als 1 als Reaktion darauf, dass die geschätzte absolute Verbindungsverzögerung kleiner als die Frequenzvervielfachungsrahmengrenze ist.

5. Verfahren nach Anspruch 3, wobei das Bestimmen (S22) des Werts des N gemäß der geschätzten absoluten Verbindungsverzögerung und der Frequenzvervielfachungsrahmengrenze umfasst:
als Reaktion darauf, dass die geschätzte absolute Verbindungsverzögerung nicht kleiner als die Frequenzvervielfachungsrahmengrenze ist, Bestimmen (S41) von Wertbedingungen des N gemäß der geschätzten absoluten Verbindungsverzögerung, der Frequenzvervielfachungsrahmengrenze und einem Verbindungsunsicherheitsparameter; und
Bestimmen (S42) einer kleinsten positiven ganzen Zahl, die die Wertbedingungen erfüllt, als Wert des N.

6. Verfahren nach Anspruch 5, wobei das Bestimmen (S41) der Wertbedingungen gemäß der geschätzten absoluten Verbindungsverzögerung, der Frequenzvervielfachungsrahmengrenze und dem Verbindungsunsicherheitsparameter umfasst:
Bestimmen (S51) einer minimalen absoluten Verbindungsverzögerung und einer maximalen absoluten Verbindungsverzögerung gemäß der geschätzten absoluten Verbindungsverzögerung und dem Verbindungsunsicherheitsparameter; und
Bestimmen (S52) der Wertbedingungen gemäß der minimalen absoluten Verbindungsverzögerung, der maximalen absoluten Verbindungsverzögerung und der Frequenzvervielfachungsrahmengrenze.

7. Verfahren nach Anspruch 6, wobei die Wertbedingungen des N lauten: das (N-1)-Fache des Zyklus der Frequenzvervielfachungsrahmengrenze ist kleiner als die minimale absolute Verbindungsverzögerung, und das N-Fache des Zyklus der Frequenzvervielfachungsrahmengrenze ist größer als die maximale absolute Verbindungsverzögerung.

8. Verfahren nach einem der Ansprüche 2 bis 7, ferner umfassend:
Empfangen (S61) von Daten von der Verbindung, Decodieren empfangener Daten und Erhalten der anfänglichen kanalzugeordneten Rahmengrenze; und
Empfangen (S62) eines Benchmark-Referenzsignals und Bestimmen der anfänglichen Ausrichtungsrahmengrenze gemäß dem Benchmark-Referenzsignal und einem vorab mit einer Sendeseite vereinbarten lemc-Intervall.

9. Elektronisches Gerät, umfassend:
mindestens einen Prozessor; und
eine Speichervorrichtung, wobei mindestens ein Programm auf der Speichervorrichtung gespeichert ist;
wobei der mindestens eine Prozessor dazu konfiguriert ist, das Verfahren zum Bestimmen einer deterministischen Verbindungsverzögerung nach einem der Ansprüche 1 bis 8 durchzuführen.

10. Computerspeichermedium, das Anweisungen umfasst, die, wenn sie durch einen Computer ausgeführt werden, den Computer dazu veranlassen, das Verfahren zum Bestimmen einer deterministischen Verbindungsverzögerung nach einem der Ansprüche 1 bis 8 durchzuführen.

## Revendications

1. Procédé de détermination de retard de liaison déterministe, comprenant :
effectuer (S11) un traitement de division de fréquence et un traitement de multiplication de fréquence sur une limite de trame initiale en fonction d'un multiple de division de fréquence prédéfini et d'un multiple de multiplication de fréquence prédéfini, afin d'obtenir une limite de trame de multiplication de fréquence ; dans lequel la limite de trame de multiplication de fréquence est configurée pour écrire données reçues d'une liaison dans un cache de la liaison, ou pour lire les données reçues dans la liaison à partir du cache ; et
déterminer (S12) le retard de liaison déterministe en fonction du retard de liaison absolu estimé et de la limite de trame de multiplication de fréquence.

2. Procédé selon la revendication 1, dans lequel la limite de trame initiale est une limite de trame initiale associée au canal ou une limite de trame d'alignement initiale, la limite de trame de multiplication de fréquence est une limite de trame de multiplication de fréquence associée au canal ou une limite de trame d'alignement de multiplication de fréquence, dans lequel la limite de trame initiale associée au canal correspond à la limite de trame de multiplication de fréquence associée au canal, la limite de trame d'alignement initiale correspond à la limite de trame d'alignement de multiplication de fréquence, et un cycle de la limite de trame de multiplication de fréquence associée au canal et un cycle de la limite de trame d'alignement de multiplication de fréquence sont identiques ;
la limite de trame de multiplication de fréquence associée au canal est configurée pour écrire données reçues de la liaison dans le cache de la liaison ; et
la limite de trame d'alignement de multiplication de fréquence est configurée pour lire les données reçues sur la liaison depuis le cache.

3. Procédé selon la revendication 2, dans lequel la détermination (S12) du retard de liaison déterministe en fonction du retard de liaison absolu estimé et de la limite de trame de multiplication de fréquence comprend :
le fait de prendre (S21) N fois le cycle de la limite de trame de multiplication de fréquence comme cycle du retard de liaison déterministe ; dans lequel N est un entier positif ; et
la détermination (S22) d'une valeur de N en fonction du retard de liaison absolu estimé et de la limite de trame de multiplication de fréquence.

4. Procédé selon la revendication 3, dans lequel la détermination (S22) de la valeur de N en fonction du retard de liaison absolu estimé et de la limite de trame de multiplication de fréquence comprend :
la détermination (S31) de la valeur de N comme étant égale à 1 en réponse au fait que le retard de liaison absolu estimé est inférieur à la limite de trame de multiplication de fréquence.

5. Procédé selon la revendication 3, dans lequel la détermination (S22) de la valeur de N en fonction du retard de liaison absolu estimé et de la limite de trame de multiplication de fréquence comprend :
en réponse au fait que le retard de liaison absolu estimé n'est pas inférieur à la limite de trame de multiplication de fréquence, la détermination (S41) des conditions de valeur de N en fonction du retard de liaison absolu estimé, de la limite de trame de multiplication de fréquence et d'un paramètre d'incertitude de liaison ; et
la détermination (S42) d'un entier positif minimal qui satisfait aux conditions de valeur en tant que la valeur de N.

6. Procédé selon la revendication 5, dans lequel la détermination (S41) des conditions de valeur en fonction du retard de liaison absolu estimé, de la limite de trame de multiplication de fréquence et du paramètre d'incertitude de liaison comprend :
la détermination (S51) du retard de liaison absolu minimal et du retard de liaison absolu maximal en fonction du retard de liaison absolu estimé et du paramètre d'incertitude de liaison ; et
la détermination (S52) des conditions de valeur en fonction du retard de liaison absolu minimal, du retard de liaison absolu maximal et de la limite de trame de multiplication de fréquence.

7. Procédé selon la revendication 6, dans lequel les conditions de valeur de N sont : (N-1) fois le cycle de la limite de trame de multiplication de fréquence est inférieur au retard de liaison absolu minimal, et N fois le cycle de la limite de trame de multiplication de fréquence est supérieur au retard de liaison absolu maximal.

8. Procédé selon l'une quelconque des revendications 2 à 7, comprenant en outre :
la réception (S61) des données provenant de la liaison, le décodage des données reçues et l'obtention de la limite de trame initiale associée au canal ; et
la réception (S62) d'un signal de référence de base et la détermination de la limite de trame d'alignement initiale en fonction du signal de référence de base et d'un intervalle LEMC convenu à l'avance avec une extrémité émettrice.

9. Équipement électronique comprenant :
au moins un processeur ; et
un dispositif de stockage, dans lequel au moins un programme est stocké ;
dans lequel l'au moins un processeur est configuré pour exécuter le procédé de détermination de retard de liaison déterministe selon l'une quelconque des revendications 1 à 8.

10. Support de stockage informatique comprenant des instructions qui, lorsqu'elles sont exécutées par un ordinateur, amènent l'ordinateur à mettre en œuvre le procédé de détermination de retard de liaison déterministe selon l'une quelconque des revendications 1 à 8.
